Europäisches Patentamt

European Patent Office

Office européen des brevets

(19)

(11) Publication number: **0 105 676**

**A1**

(12)

# EUROPEAN PATENT APPLICATION

(21) Application number: **83305647.6**

(51) Int. Cl.³: **B 60 Q 11/00**

(22) Date of filing: **22.09.83**

(30) Priority: **28.09.82 GB 8227619**

(43) Date of publication of application:
**18.04.84 Bulletin 84/16**

(84) Designated Contracting States:
**DE FR GB IT SE**

(71) Applicant: **AB Electronic Components Limited**
**Abercynon**
**Mountain Ash Mid-Glamorgan CF45 4SF Wales(GB)**

(72) Inventor: **Embrey, Derek Morris**
**102, Mill Road Lisvane**
**Cardiff Wales(GB)**

(72) Inventor: **Webb, Stuart Frederick**
**90, London Road**
**Wokingham Berkshire(GB)**

(72) Inventor: **Legg, Graham John**
**130, College Road College Town**
**Camberley Surrey(GB)**

(74) Representative: **Smith, Geoffrey Leonard**
**STANLEY, POPPLEWELL, POOLE 57 Lincoln's Inn Fields**
**London WC2A 3LS(GB)**

(54) **Lamp monitoring circuits.**

(57) It is an object of the invention to provide a circuit which will indicate failure of a motor vehicle bulb, even when the bulb is not illuminated, i.e. cold monitoring. This is achieved by the provision of a potentiometer R1, R2 and R3 with the lamp effectively connected across R2, R3 and a detecting transistor connected to a point C between R2 and R3. A small monitoring current is feed through the lamp L in the cold state and this keeps the potential at point A at a low level so that the transistor Q is not biased into conduction by the potential at the points C. Should the lamp fail, the potential at point A rises and transistor Q is biased into conduction to operate an audible and/or visual warning. In order to provide for hot monitoring, a reed switch Y is provided to earth the point A when the lamp is drawing current from the supply line B. If the lamp fails, the reed switch opens and the circuit functions as for cold monitoring.

EP 0 105 676 A1

SPP/A3359

- 1 -

Title:-  <u>LAMP MONITORING CIRCUIT</u>

This invention relates to lamp monitoring circuits, particularly for motor vehicles.

It is frequently not possible for a driver to know if a lamp has failed since the brightness of the light is insufficient for the difference in illumination to be detected from the driver's seat.  This is particularly so in the case of side lights and rear lights.

Failure of a lamp such as a side light or a rear lamp can be potentially dangerous both to the driver and occupants of the vehicle and to other road users, and to drive with a failed mandatory light is illegal.

Systems have  been designed that will warn the driver that there is a defective lamp when an attempt is made to switch them on. These are the so called "hot" sensing systems.

However, notice of failure only when a lamp has to be used is not wholly satisfactory, since, even if a spare bulb is available, the need for immediate replacment may be inconvenient.

It is much more convenient if the driver can be made aware of a lamp failure at any time, whether the lamps are unilluminated.

i.e. cold, or illuminated, i.e. hot.

In order to provide for cold and monitoring, there is provided, in accordance with the invention, a lamp monitoring circuit comprising a potentiometer including a first resistance means of higher resistance than the lamp and a second resistance means, and adapted to be connected to a d.c. source, means for connecting the lamp in parallel with the second resistance means to take a small monitoring current and effectively to short circuit the second resistance means when the lamp is sound, means for detecting an increased potential difference across the second resistance means arising from failure or absence of the lamp, and means for short circuiting the second resistance means when the lamp is illuminated, the said short circuiting means being inoperative if the lamp is foiled or missing.

The short circuiting means may be a reed switch operated by lamp current.

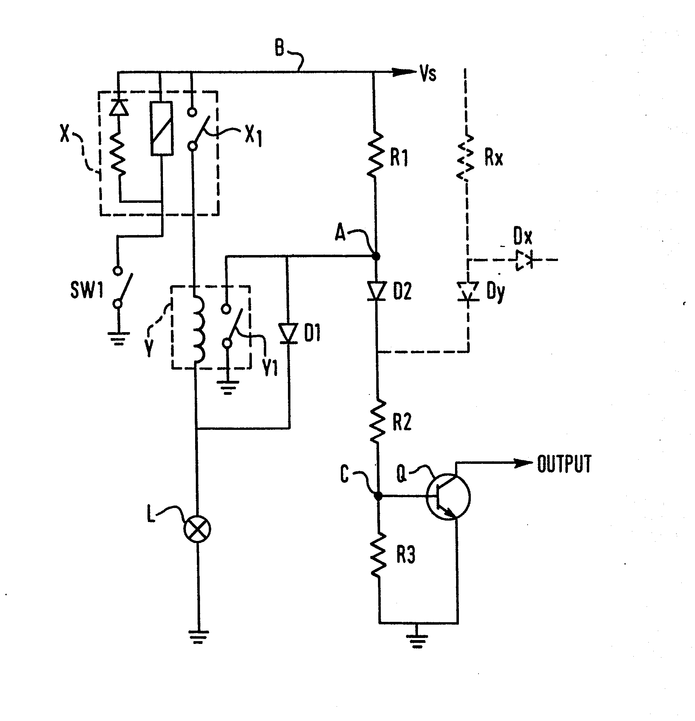

The invention will be further described with reference to the accompanying single figure of drawing which is a circuit diagram showing a preferred form of lamp monitoring circuit in accordance with the invention.

In the diagram, the lamp is shown by the reference numeral L as being connected in series with a resistor R1 and diode D1 between a line B at supply voltage $V_s$ and earth. The resistance ...........................................

of R1 is much greater than that of the lamp filament. Connected in parallel with the diode D1 and lamp L are a second diode D2 and resistors R2 and R3. The resistors R1, R2 and R3 together form a potentiometer and there is a pick-off at point A to the diode D1 and lamp L and a pick-off a point C to the base of a transistor Q which has its collector earthed and its emitter as an output from the circuit.

The lamp L is normally operated by means of a switch SW1 which controls a relay X having a contact X1 arranged to connect the lamp L between the line B and earth. In series with the lamp L there is arranged a coil of a reed switch Y, of which the contact Y1 is arranged to connect the point A to earth.

With the line B connected to the supply $V_s$ and switch SW1 open two parallel current paths exist to earth. The first path is via resistor R1, diode D1 and the lamp L. The second path is via resistor R1, diode D2, and resistors R2, R3. The resistance value of R1 is selected to be very much greater than the resistance value of the lamp. The resistance values of R2 and R3 are selected to be together much greater than that of R1. Selection of the resistance values is such that the following occurs.

With the filament of the lamp sound, the current I through the lamp is such that point A is maintained at a low potential with the result that point C will be considerably lower. Providing point C is held below the threshold potential of the forward

- 4 -

conduction of the base emitter junction of transistor Q the transistor will not conduct. This will result in no output at the collector of transistor Q.

If the lamp filament goes open circuit, the potential at point A will rise towards $V_s$. The selection of the values of R1, R2 and R3 is such that the potential at point C will then be taken above the threshold of conduction of the forward junction base- emitter of Q. This will result in an output at the collector of Q.

From the above it is clearly demonstrated that if an output exists at the collector of Q the lamp filament is not sound.

The output of Q can be fed to an audible and/or visual alarm circuit.

If switch SW1 is closed the relay will be energised to connect the lamp L into the current at full voltage for illumination. The reed switch Y is operated by lamp current to close the reed switch to earth the point A.

From the above it can be clearly seen that providing the lamp filament is sound, a current path exists from the supply $V_s$ via the relay contacts Y, through the reed coil and through the lamp L filament to earth. The reed coil is designed to ensure that the reed switch is closed when the lamp L draws

0105676

- 5 -

current.

With the lamp drawing current, point A will thus be held at earth potential by the reed switch Y.  With point A at earth potential point C will also be at earth potential and Q will not conduct.  No output will exist at the collector of Q.

Should the lamp go open circuit the lamp current will cease and the reed switch contact Y1 will open, removing the earth potential from point A.  Point A will rise towards $V_s$, point C will rise towards $V_S$ and Q1 will conduct.

It can be clearly seen that for a sound lamp no output exists at the collector of Q whilst for an open circuit lamp an output will exist at the collector of Q in both hot and cold states.

In the absence of the reed switch Y to earth the point A when the lamp is conducting, point A would rise to a potential approaching V thereby causing the transistor Q to go conductive giving a false reading.

Components RX, DX and DY shown dotted inthe circuit indicate that the resistor R2 and R3 and the transistor Q may be used in conjunction with other lamps and associated components so as to detect the failure of any one of the lamps.  The diodes DX and DY act to isolate the circuits from each other for this purpose.  The components RX and DX are of course analogous

$06

- 6 -

with R1 and D1, the remainder of the circuit components being omitted for clarity of illustration.

Various modifications may be made within the scope of the invention.

CLAIMS

1.   A lamp monitoring circuit comprising a potentiometer including a first resistance means (R1) of
higher resistance than the lamp (L) and a second
resistance means (R2, R3), and adapted to be connected
to a d.c. source, means (D1) for connecting the
lamp (L) in parallel with the second resistance
means (R2, R3) to take a small monitoring current
and effectively to short circuit the second resistance
means (R2, R3) when the lamp is sound, and means
(Q) for detecting an increased potential difference
across the second resistance means (R2, R3) arising
from failure or absence of the lamp, characterised
by the provision of means (Y) for short circuiting
the second resistance means (R2, R3) when the lamp
(L) is illuminated, the said short circuiting means
(Y) being inoperative if the lamp (L) is failed
or missing.

2.   A circuit according to claim 1, characterised
in that the detecting means comprises a transistor
(Q) associated with the second resistance means
(R2, R3) and which is changed between non-conducting
and conducting states.

3.    A circuit according to claim 2, characterised in that the second resistance means comprises two resistances (R2, R3) in series, with the base of the transistor (Q) connected between them.

4.    A circuit according to claim 1, 2 or 3, characterised in that the second resistance means (R2, R3) is of higher resistance than the first resistance means (R1).

5.    A circuit according to any of the preceding claims, characterised by the provision of a diode (D2) in series with the second resistance means (R2, R3) to enable the second resistance means (R2, R3) and detecting means (Q) to be used with a separate first resistance means (RX).

6.    A monitoring circuit according to any of. the preceding claims, characterised in that the short circuiting means comprises a reed switch (Y) operable by the lamp current.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | EP-A-0 051 299 (KABELWERKE REINSHAGEN GmbH) <br> * Figure 1 * <br> ----- | 1-4,6 | B 60 Q 11/00 |

TECHNICAL FIELDS SEARCHED (Int. Cl. ³)

B 60 Q 11/00

The present search report has been drawn up for all claims

| Place of search | Date of completion of the search | Examiner |
|---|---|---|
| THE HAGUE | 03-01-1984 | ONILLON C.G.A. |